# EUROPEAN PATENT APPLICATION

(11) **EP 4 631 768 A1**
(43) Date of publication of application: **15.10.2025**
(21) Application number: 25168174.8
(22) Date of filing: 03.04.2025
(51) Int. Cl.: B60L 3/04, B60L 3/10, B60L 15/20, B62K 3/00, G01B 11/02, G01H 1/00, G01P 15/18, B62J 45/412, B62J 45/414

(54) **A METHOD FOR CONTROLLING AN ELECTRIC SCOOTER ACCORDING TO THE SURFACE ON WHICH IT IS DRIVEN**

(30) Priority: 05.04.2024 TR 202404280
(71) Applicant: Ozyegin Universitesi, 34794 Cekmekoy/Istanbul (TR)
(72) Inventor: EDEMEN, CAGATAY, 34740 ISTANBUL (TR); OZAN, YUNUS EMRE, 34762 ISTANBUL (TR)
(74) Representative: Kaya, Erdem

(57) **Abstract**

The invention relates to a method performed by the processor unit (17) in a system comprising a processor unit (17) that enables the control of the operating state according to the pattern of the surface on which an electric vehicle that being usable by the user for transportation by standing and comprising at most three wheels and at least one electric motor is driven.

## Description

### TECHNICAL FIELD

The invention relates to a method performed by the processor unit in a system comprising a processor unit that enables the control of the operating state according to the pattern of the surface on which an electric vehicle that being usable by the user for transportation by standing and comprising at most three wheels and at least one electric motor is driven.

### PRIOR ART

An electric scooter is a personal transportation vehicle powered by an electric motor and usually located on a platform with small wheels. Electric scooters use a battery to store energy and are generally charged from an electrical outlet. Electric scooters provide advantages such as being environmentally friendly, operating quietly, and having low operating costs. In addition, due to their small size and maneuverability, they are frequently preferred in urban transportation since they can move easily in heavy traffic. Electric scooters can help reduce traffic and air pollution problems in cities and offer an alternative to sustainable transportation solutions.

In recent years, electric scooters, which offer a fast and effective solution especially for short-distance transportation, have reached increasing usage in various parts of the world. According to numerical data obtained as a result of research, it has been determined that the electric scooter market has a volume of approximately 250 billion dollars in the USA and 125 billion dollars in Europe. The fact that the increasing usage statistically shows a positive trend indicates that the growth of this market will continue in the coming years. On the other hand, with this increase in usage, there are some rule violations that need to be discussed and will be subject to regulations in the future. Foremost among these violations is the use of the vehicles by users on pedestrian sidewalks.

The use of electric scooters on pedestrian sidewalks can lead to various negative consequences. This situation primarily causes safety concerns. Because pedestrian sidewalks are safe areas designated for pedestrian traffic, and the fast and silent movement of electric scooters increases the risk of not being noticed and posing danger to pedestrians. In addition, with the increase in electric scooter use on sidewalks, these areas become more crowded and prevent pedestrians from moving freely. Furthermore, it can lead to the obstruction of disabled access and to rule violations. Therefore, it is necessary to increase regulations and public awareness regarding the use of electric scooters on sidewalks.

All the problems mentioned above have made it necessary to make an innovation in the relevant technical field as a result.

### BRIEF DESCRIPTION OF THE INVENTION

The present invention relates to a method and a system to eliminate the above-mentioned disadvantages and bring new advantages to the relevant technical field.

An object of the invention is to provide a method that enables the detection of the surface pattern during the use of electric scooters, thereby preventing rule violations and reducing accident rates.

To achieve all the objects mentioned above and that will emerge from the following detailed description, the invention relates to a method performed by the processor unit in a system comprising a processor unit that enables the control of the operating state according to the pattern of the surface on which an electric vehicle that being usable by the user for transportation by standing and comprising at most three wheels and at least one electric motor is driven. Accordingly, it comprises the steps of operating the electric motor by detecting that a switching element, which prevents energy transfer to the electric motor when in a first position and allows energy transfer to the electric motor when in a second position, is in the second position, detecting that the speed value received from a speedometer, which enables the detection of speed, is greater than zero, receiving a first measurement data from a first sensor provided to the electric motor, obtaining a first output value from the measurement data by means of the autocorrelation method, obtaining a first sensor value as a result of applying the first output value and a first weight value to a first mathematical equation, receiving a second measurement data from a second sensor provided to the electric motor, obtaining a second output value from the measurement data by means of the autocorrelation method, obtaining a second sensor value as a result of applying the second output value and a second weight value to a second mathematical equation, obtaining a total value as a result of applying the first sensor value and the second sensor value to a second mathematical equation, comparing the total value with a reference threshold value, generating a trigger signal to switch the switching element from the second position to the first position in the case that it is determined that the total value is greater than the reference threshold value. Thus, it is ensured that the operation of the electric scooter is stopped in the case that it is detected that the scooter is being driven on a prohibited surface such as a sidewalk etc. by determining which surface it is being driven on. In this case, when the user continues driving on a non- prohibited surface, the operation of the scooter is maintained.

A possible embodiment of the invention is characterized in that one of the first sensor and the second sensor is a sound sensor.

Another possible embodiment of the invention is characterized in that it comprises the steps of receiving a sound measurement data from a sound sensor that enables the detection of sounds in the environment, sampling the sound signals falling below a reference sound cut-off frequency value by passing the sound measurement data through a low-pass filter with a reference sound sampling value, writing the sampled sound signals to a sound variable during the sound sampling time, performing an autocorrelation calculation on the sound signal in the sound variable according to a third mathematical equation, and writing an autocorrelation sound output to an autocorrelation sound variable, calculating the slope of the sound signal in the autocorrelation sound variable according to a fourth mathematical equation, writing the sound signal with calculated slope to an autocorrelation sound slope variable, comparing the autocorrelation sound slope variable with a reference slope value, writing the value 1 to a sound output value variable in the case that it is determined that the autocorrelation sound slope variable is greater than the reference slope value, and writing the value -1 to the sound output value variable in the case that it is determined that the autocorrelation sound slope variable is less than the reference slope value, obtaining a sound sensor value as a result of applying the sound output value to a sound sensor weight value in a fifth mathematical equation.

A possible embodiment of the invention is characterized in that one of the first sensor and the second sensor is an acceleration sensor.

Another possible embodiment of the invention is characterized in that it comprises the steps of receiving an acceleration measurement data from an acceleration sensor that enables the measurement of acceleration, sampling the acceleration signals falling below a reference acceleration cut-off frequency value by passing the acceleration measurement data through a low-pass filter with a reference acceleration sampling value, writing the sampled acceleration signals to an acceleration variable during the acceleration sampling time, performing an autocorrelation calculation on the acceleration signal in the acceleration variable according to a sixth mathematical equation, and writing an autocorrelation acceleration output to an autocorrelation acceleration variable, calculating the slope of the acceleration signal in the autocorrelation acceleration variable according to a seventh mathematical equation, writing the acceleration signal with calculated slope to an autocorrelation acceleration slope variable, comparing the autocorrelation acceleration slope variable with a reference slope value, writing the value 1 to an acceleration output value variable in the case that it is determined that the autocorrelation acceleration slope variable is greater than the reference slope value, and writing the value -1 to the acceleration output value variable in the case that it is determined that the autocorrelation acceleration slope variable is less than the reference slope value, obtaining an acceleration sensor value as a result of applying the acceleration output value to an acceleration sensor weight value in an eighth mathematical equation.

A possible embodiment of the invention is characterized in that one of the first sensor and the second sensor is a vibration sensor.

Another possible embodiment of the invention is characterized in that it comprises the steps of receiving a vibration measurement data from a vibration sensor that enables the measurement of vibration, sampling the vibration signals falling below a reference vibration cut-off frequency value by passing the vibration measurement data through a low-pass filter with a reference vibration sampling value, writing the sampled vibration signals to a vibration variable during the vibration sampling time, performing an autocorrelation calculation on the vibration signal in the vibration variable according to a ninth mathematical equation, and writing an autocorrelation vibration output to an autocorrelation vibration variable, calculating the slope of the vibration signal in the autocorrelation vibration variable according to a tenth mathematical equation, writing the vibration signal with calculated slope to an autocorrelation vibration slope variable, comparing the autocorrelation vibration slope variable with a reference slope value, writing the value 1 to a vibration output value variable in the case that it is determined that the autocorrelation vibration slope variable is greater than the reference slope value, and writing the value -1 to the said vibration output value variable in the case that it is determined that the autocorrelation vibration slope variable is less than the reference slope value, obtaining a vibration sensor value as a result of applying the vibration output value to a vibration sensor weight value in an eleventh mathematical equation.

A possible embodiment of the invention is characterized in that one of the first sensor and the second sensor is a distance sensor.

Another possible embodiment of the invention is characterized in that it comprises the steps of receiving a distance measurement data from a distance sensor that enables the measurement of distance, sampling the distance signals falling below a reference distance cut-off frequency value by passing the distance measurement data through a low-pass filter with a reference distance sampling value, writing the sampled distance signals to a distance variable during the distance sampling time, performing an autocorrelation calculation on the distance signal in the distance variable according to a twelfth mathematical equation, and writing an autocorrelation distance output to an autocorrelation distance variable, calculating the slope of the distance signal in the autocorrelation distance variable according to a thirteenth mathematical equation, writing the distance signal with calculated slope to an autocorrelation distance slope variable, comparing the autocorrelation distance slope variable with a reference slope value, writing the value 1 to a distance output value variable in the case that it is determined that the autocorrelation distance slope variable is greater than the reference slope value, and writing the value -1 to the said distance output value variable in the case that it is determined that the autocorrelation distance slope variable is less than the reference slope value, obtaining a distance sensor value as a result of applying the distance output value to a distance sensor weight value in a fourteenth mathematical equation.

Another possible embodiment of the invention is characterized in that it comprises a switching element which prevents energy transfer to the electric motor when in a first position and allows energy transfer to the electric motor when in a second position, a speedometer provided on the electric vehicle that enables the detection of speed, a processor unit that enables the receipt of a first measurement data from a first sensor provided to the electric motor, the acquisition of a first output value from the measurement data by means of the autocorrelation method, the acquisition of a first sensor value as a result of applying the first output value and a first weight value to a first mathematical equation, the receipt of a second measurement data from a second sensor provided to the electric motor, the acquisition of a second output value from the measurement data by means of the autocorrelation method, the acquisition of a second sensor value as a result of applying the second output value and a second weight value to a second mathematical equation, the acquisition of a total value as a result of applying the said first sensor value and the second sensor value to a second mathematical equation, the comparison of the total value with a reference threshold value, and the generation of a trigger signal to switch the switching element from the second position to the first position in the case that it is determined that the total value is greater than the reference threshold value.

Another possible embodiment of the invention is characterized in that it comprises a sound sensor provided on the electric vehicle that enables the detection of sounds in the environment.

Another possible embodiment of the invention is characterized in that one of the first sensor and the second sensor is a sound sensor.

Another possible embodiment of the invention is characterized in that it comprises an acceleration sensor provided on the electric vehicle that enables the measurement of acceleration.

Another possible embodiment of the invention is characterized in that one of the first sensor and the second sensor is an acceleration sensor.

Another possible embodiment of the invention is characterized in that it comprises a vibration sensor provided on the electric vehicle that enables the measurement of vibration.

Another possible embodiment of the invention is characterized in that one of the first sensor and the second sensor is a vibration sensor.

Another possible embodiment of the invention is characterized in that it comprises a distance sensor provided on the electric vehicle that enables the measurement of distance.

Another possible embodiment of the invention is characterized in that one of the first sensor and the second sensor is a distance sensor.

### BRIEF DESCRIPTION OF THE DRAWINGS

In Figure 1, a schematic view of the system on an electric scooter is given.
In Figure 2, a schematic view of the system implementing the method is given.

### DETAILED DESCRIPTION OF THE INVENTION

In this detailed description, the subject matter is explained with references to examples without forming any restrictive effect only in order to make the subject more understandable.

The invention relates to a method performed by the processor unit (17) in a system comprising a processor unit (17) that enables the control of the operating state according to the pattern of the surface on which an electric vehicle that being usable by the user for transportation by standing and comprising at most three wheels and at least one electric motor is driven. The electric vehicle described herein is an electric scooter (10). The electric scooter (10) may be a shared or non-shared electric scooter (10).

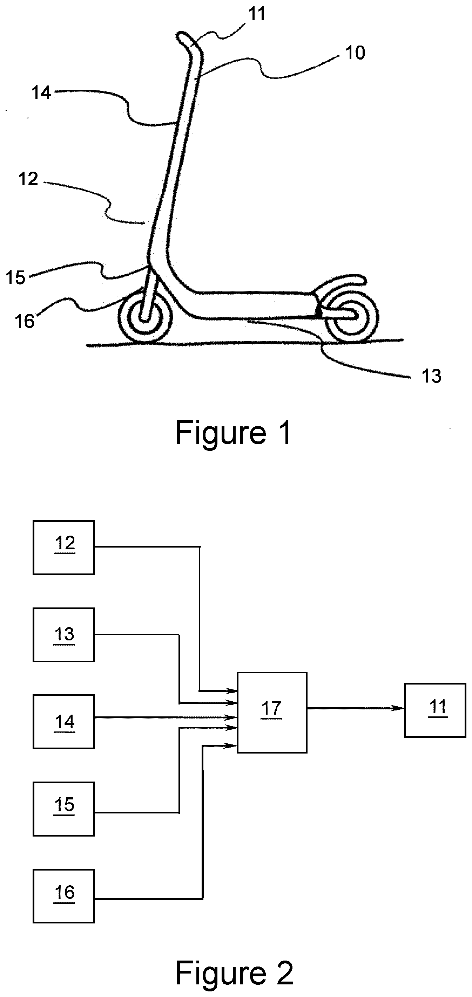

Referring to Figure 1, the system enables the detection of the surface on which the electric vehicle is driven, such as sidewalk, road, etc. The system comprises the processor unit (17) to enable this detection. In a possible embodiment of the invention, it is preferred to use a microcontroller, a CPU, a GPU, etc. as the processor unit (17). In a possible embodiment of the invention, it is preferred to use microcontrollers such as Arduino, ESP, Raspberry, etc. as the processor unit (17).

Referring to Figure 2, the system comprises a switching element (11) which prevents energy transfer to the electric motor when in a first position and allows energy transfer to the electric motor when in a second position. In a possible embodiment of the invention, the switching element (11) ensures that the energy required for the first movement is transmitted to the electric motor via electronic, mechanical or QR code and similar software systems by means of a button, a knob, a key and the like. Thus, the scooter is enabled to operate. The system comprises an energy storage unit in which energy is stored. The energy supplied to the electric motor is transmitted from the energy storage unit. In a possible embodiment of the invention, the energy storage unit may be a battery, a cell, etc. The system comprises a speedometer (12) that enables the detection of speed. In a possible embodiment of the invention, the system comprises a sound sensor (13) for detecting sounds in the environment provided to the electric vehicle. In a possible embodiment of the invention, the system comprises an acceleration sensor (14) provided on the electric vehicle that enables acceleration measurement. In a possible embodiment of the invention, the system comprises a vibration sensor (15) provided on the electric vehicle that enables vibration measurement. In a possible embodiment of the invention, the system comprises a distance sensor (16) provided on the electric vehicle that enables distance measurement.

Referring to Figure 2, the system comprises a processor unit (17) that enables the receipt of a first measurement data from a first sensor provided to the electric motor, the acquisition of a first output value from the measurement data by means of the autocorrelation method, the acquisition of a first sensor value as a result of applying the first output value and a first weight value to a first mathematical equation, the receipt of a second measurement data from a second sensor provided to the electric motor, the acquisition of a second output value from the measurement data by means of the autocorrelation method, the acquisition of a second sensor value as a result of applying the second output value and a second weight value to a second mathematical equation, the acquisition of a total value as a result of applying the first sensor value and the second sensor value to a second mathematical equation, the comparison of the total value with a reference threshold value, and the generation of a trigger signal for switching the switching element (11) from the second position to the first position in the case that it is determined that the total value is greater than the reference threshold value.

In a possible embodiment of the invention, one of the first and second sensors is the sound sensor (13). The sound sensor (13) is placed under the electric scooter (10), in areas close to the wheels. Here, while the electric scooter (10) is in motion, it is ensured that all sounds that may occur from the interaction between the wheel and the ground depending on the texture/structure of the surface on which the vehicle is driven are detected by the sound sensor (13). The sound sensor (13) operates within the range of 3.3V and 5V with the processor unit (17) without requiring additional hardware.

In an alternative embodiment of the invention, one of the first and second sensors is the acceleration sensor (14). It is preferred that the acceleration sensor (14) is placed at the point closest to the front wheel of the electric scooter (10). The acceleration sensor (14) provides the determination of the position of the object in three vertical axes (x - y - z) thanks to the gyroscope inside. Acceleration sensor (14) provides precise detection of vibrations and axis changes caused by the surface. During the operation of the electric scooter (10), periodic structures such as paving stones and joint gaps between paving stones cause changes on the Z axis. The acceleration sensor (14) is capable of operating between -40 and +85 degrees. The acceleration sensor (14) also operates within the energy range of 1.8V - 3.6V without requiring additional hardware with the processor unit (17). The acceleration sensor (14), with its small size and operation sensitivity in the range of 270 to 330 mV/g, enables direct reading of instantaneous and small changes on the axes.

In an alternative embodiment of the invention, one of the first and second sensors is the vibration sensor (15). The vibration sensor (15) operates based on piezoelectric properties. The vibration sensor (15) is placed at a point close to the wheels of the electric scooter (10). The vibration sensor (15) enables the detection of vibrations generated based on piezoelectric properties.

In an alternative embodiment of the invention, one of the first and second sensors is the distance sensor (16). The distance sensor (16) is placed at the front side of the electric scooter (10) at a specific angle. The distance sensor (16) enables the detection of changes on the surface. When the electric scooter (10) is in operation, for example, in the case where the vehicle is on a sidewalk, the distance sensor (16) enables the examination of data resulting from changes in the distance between the distance sensor (16) and the ground caused by the differences between paving stones and joint gaps. When the electric scooter (10) is travelling on the sidewalk, the pattern is detected by the changes in the distance measured when the electric scooter (10) encounters gaps between the paving stones. **The** distance sensor (16) is capable of collecting 100 samples per second with a precision of 0.5 cm.

**In** a possible embodiment of the invention, the system comprises at least one of the sound sensor (13), the acceleration sensor (14), the vibration sensor (15), and the distance sensor (16) on the electric scooter (10). **In** an alternative embodiment of the invention, the electric scooter (10) comprises the sound sensor (13), the acceleration sensor (14), the vibration sensor (15), and the distance sensor (16).

The working scenario of the invention is described as follows.

Referring to Figure 2, the electric scooter (10) comprises the sound sensor (13), the acceleration sensor (14), the vibration sensor (15), and the distance sensor (16). When the user uses the electric scooter (10), the electric scooter (10) is activated by triggering the switching element (11). With the triggering of the switching element (11), the position of the switching element (11) is changed from the first position to the second position. In this case, energy is transferred from the energy storage unit to the electric motor. The processor unit enables the detection that the switching element (11) is in the second position. The processor unit enables the comparison of the speed data received from the speedometer (12) with the zero value.

The processor unit enables the receipt of a sound measurement data from the sound sensor (13) in the case that it is determined that the speed value received from the speedometer (12) is greater than zero. By passing the sound measurement data through a low-pass filter, sound signals falling below a reference sound cut-off frequency value are sampled with a reference sound sampling value. The reference sound cut-off frequency is a cut-off frequency value that enables the detection of only the sounds that may arise depending on the pattern. That is, the low-pass filter passes only the sounds below the reference sound cut-off frequency. The reference sound cut-off frequency is selected at a value capable of eliminating all noise collected by the sound sensor (13). At the same time, the reference sound cut-off frequency is selected at a level to filter all sounds that may occur when the electric scooter (10) is driven on surfaces that do not have a specific pattern such as asphalt. The sampled sound signals are written to a sound variable during the sound sampling time. An autocorrelation calculation is performed on the sound signal in the sound variable according to a third mathematical equation, and an autocorrelation sound output is written to an autocorrelation sound variable. The slope of the sound signal in the autocorrelation sound variable is calculated according to a fourth mathematical equation. The sound signal with calculated slope is written to an autocorrelation sound slope variable. In a possible embodiment of the invention, due to the symmetrical structure of the autocorrelation signal mentioned here, it is sufficient to calculate the slope of only half of the signal. Thus, the desired results can be obtained with lower computational power. The autocorrelation sound slope variable is compared with a reference slope value. If it is determined that the autocorrelation sound slope variable is greater than the reference slope value, the value 1 is written to a sound output value variable; if it is determined that the autocorrelation sound slope variable is less than the reference slope value, the value -1 is written to the sound output value variable. A sound sensor (13) value is obtained as a result of applying the sound output value to a sound sensor (13) weight value in a fifth mathematical equation. In a possible embodiment of the invention, the fifth mathematical equation is a multiplication operation.

The processor unit enables the receipt of an acceleration measurement data from the acceleration sensor (14) in the case that it is determined that the speed value received from the speedometer (12) is greater than zero. By passing the acceleration measurement data through a low-pass filter, acceleration signals falling below a reference acceleration cut-off frequency value are sampled with a reference acceleration sampling value. The reference acceleration cut-off frequency is a cut-off frequency value that enables the detection of only the accelerations that may arise depending on the pattern. That is, the low-pass filter passes only the accelerations below the reference acceleration cut-off frequency. The reference acceleration cut-off frequency is selected at a value capable of eliminating all noise collected by the acceleration sensor (14). At the same time, the reference acceleration cut-off frequency is selected at a level to filter all accelerations that may occur when the electric scooter (10) is driven on surfaces that do not have a specific pattern such as asphalt. The sampled acceleration signals are written to an acceleration variable during the acceleration sampling time. An autocorrelation calculation is performed on the acceleration signal in the acceleration variable according to a sixth mathematical equation, and an autocorrelation acceleration output is written to an autocorrelation acceleration variable. The slope of the acceleration signal in the autocorrelation acceleration variable is calculated according to a seventh mathematical equation. The acceleration signal with calculated slope is written to an autocorrelation acceleration slope variable. In a possible embodiment of the invention, due to the symmetrical structure of the autocorrelation signal mentioned here, it is sufficient to calculate the slope of only half of the signal. Thus, the desired results can be obtained with lower computational power. The autocorrelation acceleration slope variable is compared with a reference slope value. If it is determined that the autocorrelation acceleration slope variable is greater than the reference slope value, the value 1 is written to an acceleration output value variable; if it is determined that the autocorrelation acceleration slope variable is less than the reference slope value, the value -1 is written to the acceleration output value variable. An acceleration sensor (14) value is obtained as a result of applying the acceleration output value to an acceleration sensor (14) weight value in an eighth mathematical equation. In a possible embodiment of the invention, the eighth mathematical equation is a multiplication operation.

The processor unit enables the receipt of a vibration measurement data from the vibration sensor (15) in the case that it is determined that the speed value received from the speedometer (12) is greater than zero. By passing the vibration measurement data through a low-pass filter, vibration signals falling below a reference vibration cut-off frequency value are sampled with a reference vibration sampling value. The reference vibration cut-off frequency is a cut-off frequency value that enables the detection of only the vibrations that may arise depending on the pattern. That is, the low-pass filter passes only the vibrations below the reference vibration cut-off frequency. The reference vibration cut-off frequency is selected at a value capable of eliminating all noise collected by the vibration sensor (15). At the same time, the reference vibration cut-off frequency is selected at a level to filter all vibrations that may occur when the electric scooter (10) is driven on surfaces that do not have a specific pattern such as asphalt. The sampled vibration signals are written to a vibration variable during the vibration sampling time. An autocorrelation calculation is performed on the vibration signal in the vibration variable according to a ninth mathematical equation, and an autocorrelation vibration output is written to an autocorrelation vibration variable. The slope of the vibration signal in the autocorrelation vibration variable is calculated according to a tenth mathematical equation. The vibration signal with calculated slope is written to an autocorrelation vibration slope variable. In a possible embodiment of the invention, due to the symmetrical structure of the autocorrelation signal mentioned here, it is sufficient to calculate the slope of only half of the signal. Thus, the desired results can be obtained with lower computational power. The autocorrelation vibration slope variable is compared with a reference slope value. If it is determined that the autocorrelation vibration slope variable is greater than the reference slope value, the value 1 is written to a vibration output value variable; if it is determined that the autocorrelation vibration slope variable is less than the reference slope value, the value -1 is written to the vibration output value variable. A vibration sensor (15) value is obtained as a result of applying the vibration output value to a vibration sensor (15) weight value in an eleventh mathematical equation. In a possible embodiment of the invention, the eleventh mathematical equation is a multiplication operation.

The processor unit enables the receipt of a distance measurement data from the distance sensor (16) in the case that it is determined that the speed value received from the speedometer (12) is greater than zero. By passing the distance measurement data through a low-pass filter, distance signals falling below a reference distance cut-off frequency value are sampled with a reference distance sampling value. The reference distance cut-off frequency is a cut-off frequency value that enables the detection of only the distances that may arise depending on the pattern. That is, the low-pass filter passes only the distances below the reference distance cut-off frequency. The reference distance cut-off frequency is selected at a value capable of eliminating all noise collected by the distance sensor (16). At the same time, the reference distance cut-off frequency is selected at a level to filter all distances that may occur when the electric scooter (10) is driven on surfaces that do not have a specific pattern such as asphalt. The sampled distance signals are written to a distance variable during the distance sampling time. An autocorrelation calculation is performed on the distance signal in the distance variable according to a twelfth mathematical equation, and an autocorrelation distance output is written to an autocorrelation distance variable. The slope of the distance signal in the autocorrelation distance variable is calculated according to a thirteenth mathematical equation. The distance signal with calculated slope is written to an autocorrelation distance slope variable. In a possible embodiment of the invention, due to the symmetrical structure of the autocorrelation signal mentioned here, it is sufficient to calculate the slope of only half of the signal. Thus, the desired results can be obtained with lower computational power. The autocorrelation distance slope variable is compared with a reference slope value. If it is determined that the autocorrelation distance slope variable is greater than the reference slope value, the value 1 is written to a distance output value variable; if it is determined that the autocorrelation distance slope variable is less than the reference slope value, the value -1 is written to the distance output value variable. A distance sensor (16) value is obtained as a result of applying the distance output value to a distance sensor (16) weight value in a fourteenth mathematical equation. In a possible embodiment of the invention, the fourteenth mathematical equation is a multiplication operation.

The processor unit enables the acquisition of a total value as a result of applying the sound sensor (13) value, the acceleration sensor (14) value, the vibration sensor (15) value, and the distance sensor (16) value to a second mathematical equation. In a possible embodiment of the invention, the second mathematical equation is an addition operation. The processor unit enables the comparison of the total value with a reference threshold value. The processor unit, in the case that it is determined that the total value is greater than the reference threshold value, determines that the electric scooter (10) is being driven on a sidewalk. In this case, the processor unit (17) enables the generation of a trigger signal to switch the switching element (11) from the second position to the first position in order to stop the electric scooter (10). The processor unit, in the case that it is determined that the total value is less than the reference threshold value, determines that the electric scooter (10) is being driven on an asphalt road.

In a main embodiment of the invention, the method performed by the system described in detail above comprises the following steps:
- operating the electric motor by detecting that a switching element (11), which prevents energy transfer to the electric motor when in a first position and allows energy transfer to the electric motor when in a second position, is in the second position,
- detecting that the speed value received from a speedometer (12), which enables the detection of speed, is greater than zero,
- receiving a first measurement data from a first sensor provided to the electric motor,
- obtaining a first output value from the measurement data by means of the autocorrelation method,
- obtaining a first sensor value as a result of applying the first output value and a first weight value to a first mathematical equation,
- receiving a second measurement data from a second sensor provided to the electric motor,
- obtaining a second output value from the measurement data by means of the autocorrelation method,
- obtaining a second sensor value as a result of applying the second output value and a second weight value to a second mathematical equation,
- obtaining a total value as a result of applying the first sensor value and the second sensor value to a second mathematical equation,
- comparing the total value with a reference threshold value,
- generating a trigger signal to switch the switching element (11) from the second position to the first position in the case that it is determined that the total value is greater than the reference threshold value.

One of the first sensor and the second sensor may be a sound sensor (13).

**In** an alternative embodiment of the invention, the method comprises the following steps in addition to the main embodiment:
- receiving a sound measurement data from a sound sensor that enables the detection of sounds in the environment,
- sampling the sound signals falling below a reference sound cut-off frequency value by passing the sound measurement data through a low-pass filter with a reference sound sampling value,
- writing the sampled sound signals to a sound variable during the sound sampling time,
- performing an autocorrelation calculation on the sound signal in the sound variable according to a third mathematical equation, and writing an autocorrelation sound output to an autocorrelation sound variable,
- calculating the slope of the sound signal in the autocorrelation sound variable according to a fourth mathematical equation,
- writing the sound signal with calculated slope to an autocorrelation sound slope variable,
- comparing the autocorrelation sound slope variable with a reference slope value,
- writing the value 1 to a sound output value variable in the case that it is determined that the autocorrelation sound slope variable is greater than the reference slope value, and writing the value -1 to the sound output value variable in the case that it is determined that the autocorrelation sound slope variable is less than the reference slope value,
- obtaining a sound sensor (13) value as a result of applying the sound output value to a sound sensor (13) weight value in a fifth mathematical equation.

One of the first sensor and the second sensor may be an acceleration sensor (14).

In an alternative embodiment of the invention, the method comprises the following steps in addition to the main embodiment:
- receiving an acceleration measurement data from an acceleration sensor that enables the measurement of acceleration,
- sampling the acceleration signals falling below a reference acceleration cut-off frequency value by passing the acceleration measurement data through a low-pass filter with a reference acceleration sampling value,
- writing the sampled acceleration signals to an acceleration variable during the acceleration sampling time,
- performing an autocorrelation calculation on the acceleration signal in the acceleration variable according to a sixth mathematical equation, and writing an autocorrelation acceleration output to an autocorrelation acceleration variable,
- calculating the slope of the acceleration signal in the autocorrelation acceleration variable according to a seventh mathematical equation,
- writing the acceleration signal with calculated slope to an autocorrelation acceleration slope variable,
- comparing the autocorrelation acceleration slope variable with a reference slope value,
- writing the value 1 to an acceleration output value variable in the case that it is determined that the autocorrelation acceleration slope variable is greater than the reference slope value, and writing the value -1 to the acceleration output value variable in the case that it is determined that the autocorrelation acceleration slope variable is less than the reference slope value,
- obtaining an acceleration sensor (14) value as a result of applying the acceleration output value to an acceleration sensor (14) weight value in an eighth mathematical equation.

One of the first sensor and the second sensor may be a vibration sensor (15).

In an alternative embodiment of the invention, the method comprises the following steps in addition to the main embodiment:
- receiving a vibration measurement data from a vibration sensor that enables the measurement of vibration,
- sampling the vibration signals falling below a reference vibration cut-off frequency value by passing the vibration measurement data through a low-pass filter with a reference vibration sampling value,
- writing the sampled vibration signals to a vibration variable during the vibration sampling time,
- performing an autocorrelation calculation on the vibration signal in the vibration variable according to a ninth mathematical equation, and writing an autocorrelation vibration output to an autocorrelation vibration variable,
- calculating the slope of the vibration signal in the autocorrelation vibration variable according to a tenth mathematical equation,
- writing the vibration signal with calculated slope to an autocorrelation vibration slope variable,
- comparing the autocorrelation vibration slope variable with a reference slope value,
- writing the value 1 to a vibration output value variable in the case that it is determined that the autocorrelation vibration slope variable is greater than the reference slope value, and writing the value -1 to the said vibration output value variable in the case that it is determined that the autocorrelation vibration slope variable is less than the reference slope value,
- obtaining a vibration sensor (15) value as a result of applying the vibration output value to a vibration sensor (15) weight value in an eleventh mathematical equation.

One of the first sensor and the second sensor may be a distance sensor (16).

In an alternative embodiment of the invention, the method comprises the following steps in addition to the main embodiment:
- receiving a distance measurement data from a distance sensor that enables the measurement of distance,
- sampling the distance signals falling below a reference distance cut-off frequency value by passing the distance measurement data through a low-pass filter with a reference distance sampling value,
- writing the sampled distance signals to a distance variable during the distance sampling time,
- performing an autocorrelation calculation on the distance signal in the distance variable according to a twelfth mathematical equation, and writing an autocorrelation distance output to an autocorrelation distance variable,
- calculating the slope of the distance signal in the autocorrelation distance variable according to a thirteenth mathematical equation,
- writing the distance signal with calculated slope to an autocorrelation distance slope variable,
- comparing the autocorrelation distance slope variable with a reference slope value,
- writing the value 1 to a distance output value variable in the case that it is determined that the autocorrelation distance slope variable is greater than the reference slope value, and writing the value -1 to the said distance output value variable in the case that it is determined that the autocorrelation distance slope variable is less than the reference slope value,
- obtaining a distance sensor value as a result of applying the distance output value to a distance sensor weight value in a fourteenth mathematical equation.

The scope of protection of the invention is specified in the attached claims and cannot be limited to those explained for sampling purposes in this detailed description. It is evident that a person skilled in the art may exhibit similar embodiments in light of the above-mentioned facts without drifting apart from the main theme of the invention.

### REFERENCE NUMBERS GIVEN IN THE FIGURE

10 Electric scooter
11 Switching element
12 Speedometer
13 Sound sensor
14 Acceleration sensor
15 Vibration sensor
16 Distance sensor
17 Processor unit

## Claims

1. The invention relates to a method performed by the processor unit in a system comprising a processor unit that enables the control of the operating state according to the pattern of the surface on which an electric vehicle that being usable by the user for transportation by standing and comprising at most three wheels and at least one electric motor is driven ***characterized in that*** it comprises the steps of;
- operating the electric motor by detecting that a switching element (11), which prevents energy transfer to the electric motor when in a first position and allows energy transfer to the electric motor when in a second position, is in the second position,
- detecting that the speed value received from a speedometer (12), which enables the detection of speed, is greater than zero,
- receiving a first measurement data from a first sensor provided to the electric motor,
- obtaining a first output value from the measurement data by means of the autocorrelation method,
- obtaining a first sensor value as a result of applying the first output value and a first weight value to a first mathematical equation,
- receiving a second measurement data from a second sensor provided to the electric motor,
- obtaining a second output value from the measurement data by means of the autocorrelation method,
- obtaining a second sensor value as a result of applying the second output value and a second weight value to a second mathematical equation,
- obtaining a total value as a result of applying the first sensor value and the second sensor value to a second mathematical equation,
- comparing the total value with a reference threshold value,
- generating a trigger signal to switch the switching element (11) from the second position to the first position in the case that it is determined that the total value is greater than the reference threshold value.

2. The method according to claim *1, **characterized in that*** further comprising the step of
- receiving a sound measurement data from a sound sensor (13), which is one of the first sensor and the second sensor and enables the detection of sounds in the environment
- sampling the sound signals falling below a reference sound cut-off frequency value by passing the sound measurement data through a low-pass filter with a reference sound sampling value,
- writing the sampled sound signals to a sound variable during the sound sampling time,
- performing an autocorrelation calculation on the sound signal in the sound variable according to a third mathematical equation, and writing an autocorrelation sound output to an autocorrelation sound variable,
- calculating the slope of the sound signal in the autocorrelation sound variable according to a fourth mathematical equation,
- writing the sound signal with calculated slope to an autocorrelation sound slope variable,
- comparing the autocorrelation sound slope variable with a reference slope value,
- writing the value 1 to a sound output value variable in the case that it is determined that the autocorrelation sound slope variable is greater than the reference slope value, and writing the value -1 to the sound output value variable in the case that it is determined that the autocorrelation sound slope variable is less than the reference slope value,
- obtaining a sound sensor (13) value as a result of applying the sound output value to a sound sensor (13) weight value in a fifth mathematical equation.

3. The method according to claim *1, **characterized in that*** further comprising the step of
- receiving an acceleration measurement data from an acceleration sensor (14), which is one of the first sensor and the second sensor and enables the measurement of acceleration,
- sampling the acceleration signals falling below a reference acceleration cut-off frequency value by passing the acceleration measurement data through a low-pass filter with a reference acceleration sampling value,
- writing the sampled acceleration signals to an acceleration variable during the acceleration sampling time,
- performing an autocorrelation calculation on the acceleration signal in the acceleration variable according to a sixth mathematical equation, and writing an autocorrelation acceleration output to an autocorrelation acceleration variable,
- calculating the slope of the acceleration signal in the autocorrelation acceleration variable according to a seventh mathematical equation,
- writing the acceleration signal with calculated slope to an autocorrelation acceleration slope variable,
- comparing the autocorrelation acceleration slope variable with a reference slope value,
- writing the value 1 to an acceleration output value variable in the case that it is determined that the autocorrelation acceleration slope variable is greater than the reference slope value, and writing the value -1 to the acceleration output value variable in the case that it is determined that the autocorrelation acceleration slope variable is less than the reference slope value,
- obtaining an acceleration sensor (14) value as a result of applying the acceleration output value to an acceleration sensor (14) weight value in an eighth mathematical equation.

4. The method according to claim *1, **characterized in that*** further comprising the step of
- receiving a vibration measurement data from a vibration sensor (15), which is one of the first sensor and the second sensor and enables the measurement of vibration,
- sampling the vibration signals falling below a reference vibration cut-off frequency value by passing the vibration measurement data through a low-pass filter with a reference vibration sampling value,
- writing the sampled vibration signals to a vibration variable during the vibration sampling time,
- performing an autocorrelation calculation on the vibration signal in the vibration variable according to a ninth mathematical equation, and writing an autocorrelation vibration output to an autocorrelation vibration variable,
- calculating the slope of the vibration signal in the autocorrelation vibration variable according to a tenth mathematical equation,
- writing the vibration signal with calculated slope to an autocorrelation vibration slope variable,
- comparing the autocorrelation vibration slope variable with a reference slope value,
- writing the value 1 to a vibration output value variable in the case that it is determined that the autocorrelation vibration slope variable is greater than the reference slope value, and writing the value -1 to the said vibration output value variable in the case that it is determined that the autocorrelation vibration slope variable is less than the reference slope value,
- obtaining a vibration sensor (15) value as a result of applying the vibration output value to a vibration sensor (15) weight value in an eleventh mathematical equation.

5. The method according to claim 1, ***characterized in that*** further comprising the step of
- receiving a distance measurement data from a distance sensor, which is one of the first sensor and the second sensor and enables the measurement of distance,
- sampling the distance signals falling below a reference distance cut-off frequency value by passing the distance measurement data through a low-pass filter with a reference distance sampling value,
- writing the sampled distance signals to a distance variable during the distance sampling time,
- performing an autocorrelation calculation on the distance signal in the distance variable according to a twelfth mathematical equation, and writing an autocorrelation distance output to an autocorrelation distance variable,
- calculating the slope of the distance signal in the autocorrelation distance variable according to a thirteenth mathematical equation,
- writing the distance signal with calculated slope to an autocorrelation distance slope variable,
- comparing the autocorrelation distance slope variable with a reference slope value,
- writing the value 1 to a distance output value variable in the case that it is determined that the autocorrelation distance slope variable is greater than the reference slope value, and writing the value -1 to the said distance output value variable in the case that it is determined that the autocorrelation distance slope variable is less than the reference slope value,
- obtaining a distance sensor value as a result of applying the distance output value to a distance sensor weight value in a fourteenth mathematical equation.

6. A system that enables the control of the operating state according to the pattern of the surface on which an electric vehicle that being usable by the user for transportation by standing and comprising at most three wheels and at least one electric motor is driven, ***characterized in that***; a switching element (11) which prevents energy transfer to the electric motor when in a first position and allows energy transfer to the electric motor when in a second position, a speedometer (12) provided on the electric vehicle that enables the detection of speed, a processor unit (17) that enables the receipt of a first measurement data from a first sensor provided to the electric motor, the acquisition of a first output value from the measurement data by means of the autocorrelation method, the acquisition of a first sensor value as a result of applying the first output value and a first weight value to a first mathematical equation, the receipt of a second measurement data from a second sensor provided to the electric motor, the acquisition of a second output value from the measurement data by means of the autocorrelation method, the acquisition of a second sensor value as a result of applying the second output value and a second weight value to a second mathematical equation, the acquisition of a total value as a result of applying the said first sensor value and the second sensor value to a second mathematical equation, the comparison of the total value with a reference threshold value, and the generation of a trigger signal to switch the switching element (11) from the second position to the first position in the case that it is determined that the total value is greater than the reference threshold value.

7. The system according to claim 6, ***characterized in that*** it comprises a sound sensor (13) provided on the electric vehicle that enables the detection of sounds in the environment.

8. The system according to claim 6, ***characterized in that*** one of the first sensor and the second sensor is a sound sensor (13).

9. The system according to claim 6, ***characterized in that*** it comprises an acceleration sensor (14) provided on the electric vehicle that enables the measurement of acceleration.

10. The system according to claim 6, ***characterized in that*** one of the first sensor and the second sensor is an acceleration sensor (14).

11. The system according to claim 6, ***characterized in that*** it comprises a vibration sensor (15) provided on the electric vehicle that enables the measurement of vibration.

12. The system according to claim 6, ***characterized in that*** one of the first sensor and the second sensor is a vibration sensor (15).

13. The system according to claim 6, ***characterized in that*** it comprises a distance sensor (16) provided on the electric vehicle that enables the measurement of distance.

14. The system according to claim 6, ***characterized in that*** one of the first sensor and the second sensor is a distance sensor (16).
